# EUROPÄISCHE PATENTSCHRIFT

(11) **EP 1 313 348 B1**
(45) Veröffentlichungstag und Bekanntmachung des Hinweises auf die Patenterteilung: **27.08.2014**
(21) Anmeldenummer: 02022609.8
(22) Anmeldetag: 09.10.2002
(51) Int. Cl.: H04Q 11/04

(54) **Lokales integriertes Telefon- und Datennetz**
Local integrated telephone and data network
Réseau local intégré téléphonique et de données

(30) Priorität: 20.10.2001 DE 10152263
(43) Veröffentlichungstag der Anmeldung: 21.05.2003
(73) Patentinhaber: Merten GmbH, 51674 Wiehl (DE)
(72) Erfinder: Bergmann, Jürgen, 51674 Wiehl (DE); Kuhnert, Jürgen, 51702 Bergneustadt (DE); Ludolf, Wilhelm S., 72622 Nürtingen (DE); Herrmann, Bernd-Peter, 51645 Gummersbach (DE); Klingberg, Axel, 51647 Gummersbach (DE)

(56) Entgegenhaltungen:
- WO-A-99/25098
- US-A- 6 137 880
- TAKAO KASHIWAMURA ET AL: "TELECOMMUNICATIONS ASPECTS OF INTELLIGENT BUILDINGS" IEEE COMMUNICATIONS MAGAZINE, IEEE SERVICE CENTER,NEW YORK, NY, US, Bd. 29, Nr. 4, 1. April 1991 (1991-04-01), Seiten 28-32,39, XP000228273 ISSN: 0163-6804
- IBBA A ET AL: "INTEGRAL 30, DIE TK-ANLAGE FUER DEN EINSTIEG IN DIE ISDN-KOMMUNIKATION" TELENORMA NACHRICHTEN, TELENORMA, FRANKFURT AM MAIN, DE, Nr. 95, Januar 1991 (1991-01), Seiten 3-6, XP000177883

## Beschreibung

Die Erfindung betrifft ein lokales integriertes Telefon- und Datennetz mit mindestens einem an ein öffentliches Breitbandnetz anschliessbaren Übergabepunkt, einem Verteiler, der das Breitbandnetz mit einem Telefonstrang und einem Datenstrang verbindet, einer in dem Telefonstrang enthaltenen Telekommunikationsanlage und einem in dem Datenstrang enthaltenen Sternkoppler.

In vielen Privathaushalten und kleinen Betrieben sind Telekommunikationsanlagen als Nebenstellenanlagen mit einer Anzahl von Teilnehmeranschlüssen installiert. Obwohl die neueren Anlagen zunehmend in ISDN-Technik (S0-Schnittstelle in Vierdrahttechnik) auf der Eingangsseite arbeiten, werden auf der Teilnehmerseite meistens weiterhin aus Kostengründen die bekannten alb-Schnittstellen in Zweidrahttechnik für analoge Telefone eingesetzt. Die Zweidraht-Leitungen führen zu jeweils einer Anschlussleitung, an die als Endgeräte Telefone, Faxgeräte und Anrufbeantworter angeschlossen werden können. In vielen Fällen sind auch Modems als Endgeräte zur Datenübertragung, z. B. für einen Internet-Zugang, an die Anlage angeschlossen.

Durch neue Modulationsverfahren eröffnet sich die Möglichkeit, neben den traditionellen Telefondiensten, die über den Basisanschluss, z. B. ISDN, ins Haus kommen, weitere breitbandige Dienste nutzen zu können, insbesondere xDSL. Dabei wird der vorhandenen Hausanschlussleitung, die bisher nur im Basisband betrieben wurde, ein hochfrequenter Träger überlagert, der seinerseits einen breitbandigen Datenkanal von mehreren hundert Kilobit/s bis zu einigen Megabit/s ermöglicht. Üblicherweise stehen dann am Übergabepunkt nach einem Verteiler (Splitter- bzw. Frequenzweiche) und den zugehörigen Leitungsabschlussgeräten die Dienste im Basisband zur Verfügung, und zwar Telefon- und Faxdienste an einer SO- oder a/b-Schnittstelle und Datendienste in xDSL an einer standardisierten Datenschnittstelle (z. B. Twisted Pair Ethernet) zur Verfügung. Die Telekommunikationsanlagen (TK-Anlagen) und die zugehörige Verkabelung sind darauf abgestimmt, die klassischen Telekom-Dienste (Telefon und Fax) weiter verteilen zu können. Für die Verteilung der breitbandigen Datendienste sind diese Anlagen nicht geeignet.

Unter einem Breitbandnetz wird im Rahmen der vorliegenden Beschreibung ein Netz verstanden, das ausser den herkömmlichen Telekom-Diensten zusätzliche weitere breitbandige Dienste, z,B. xDSL, für die Datenübertragung ermöglicht.

So wie der breitbandige Datenkanal über das Breitbandnetz ins Haus kommt, kann man ihn auch ihn Haus weitertransportieren, beispielsweise als durchgängige xDSL-Lösung. Nachteilig ist hierbei jedoch der grosse Geräteaufwand, da für jede der sternförmig auf die Telekommunikationsanlage zulaufenden Leitungen ein Modulator/Demodulator bei der TK-Anlage und ein weiterer beim jeweiligen Teilnehmer benötigt wird, um das Datensignal für die Einspeisung in das Kabel in das HF-Band hochzusetzen und dann wieder am anderen Leitungsende beim Entnehmen aus dem Kabel in das Basisband zurückzusetzen.

Eine andere Lösung sieht jeweils zwei unabhängige Netze vor, eines für die herkömmlichen Telekom-Dienste und ein anderes für die Datendienste, wobei beide in einem Verteiler zusammengefasst und an das Breitbandnetz angeschlossen werden. Dies erfordert einen hohen Leitungsaufwand innerhalb des Gebäudes, weil das Telekommunikationsnetz zweiadrig und das Datennetz vieradrig ausgeführt werden muss. Bei bestehenden Gebäuden ist eine derartig umfangreiche Leitungsverlegung häufig mit sehr grossen Schwierigkeiten verbunden. Es besteht häufig die Notwendigkeit, einen Computer und ein Telefon im selben Raum verfügbar zu machen. Dies bedeutet, dass entsprechende Kabel in den Raum hinein verlegt werden müssen. Häufig stehen hierfür nur bereits verlegte vieradrige Kabel zur Verfugung.

*Derartige parallele Telekommunikations- und Datennetze sind in unterschiedlichsten Ausführungen sowohl drahtgebunden als auch drahtlos oder auch in einer Kombination beider Übertragungsmedien bekannt, beispielsweise aus der* WO 99/25098 und aus der US-A-6 137 880.

Der Erfindung liegt die Aufgabe zugrunde, ein integriertes Telefon- und Datennetz zu konzipieren, das imstande ist, Telekommunikationsdienste und Datendienste simultan bereitzustellen und zu verteilen und dabei mit einem geringen Leitungsaufwand auskommt.

Das lokale integrierte Telefon- und Datennetz der Erfindung ist durch den Anspruch 1 definiert. Hiernach weist das Telefon- und Datennetz im Datenstrang mindestens einen Sternkoppler auf, der mit Vierdraht-Leitungen für jeweils eine Abschlusseinheit verbunden ist. Die Vierdraht-Leitungen des Sternkopplers sind mit einem Umsetzer verbunden, der eine Umsetzung von einer Vierdraht-Leitung auf eine bidirektionale Zweidraht-Leitung durchführt. Jeweils eine Zweidraht-Leitung des Telefonstranges ist mit einer Zweidraht-Leitung des Datenstranges vereinigt. Diese vereinigten Zweidraht-Leitungen führen zu einer Teilnehmerstelle. Auf diese Weise ist es möglich, mit zwei Zweidraht-Leitungen sowohl Telekommunikationsdienste als auch breitbandige Datendienste simultan auszuführen. Die beiden Zweidraht-Leitungen können gemeinsam verlegt und beispielsweise in demselben Kabel vereinigt sein. Auf diese Weise entsteht aus zwei funktional getrennten Netzen ein integriertes Netz, bei dem die Teilnehmer von zwei miteinander vereinigten Leitungen bedient werden. Diese vereinigten Leitungen benötigen insgesamt nur vier Adern. Auf diese Weise wird das interne Telefonnetz mit dem internen Datennetz in der Weise vereinigt, dass beide Netze funktional voneinander getrennt arbeiten, jedoch hinsichtlich ihrer Verkabelung vereinigt sind, wobei eine geringe Aderzahl zu den Anschlusseinheiten für die Endgeräte führt.

Das erfindungsgemäße Telefon- und Datennetz kann als "Raum-Multiplex-Lösung" bezeichnet werden. Das bedeutet, dass für die Datenübertragung ein bisher ungenutztes Adernpaar in einer bereits verlegten Telefonleitung benutzt werden kann. Die üblicherweise eingesetzten Standard-Telefonleitungen enthalten in aller Regel zwei oder mehr Adernpaare. Für eine traditionelle a/b-Schnittstelle wird jedoch nur ein Adernpaar benötigt. Das zweite Adernpaar kann somit zur Datenübertragung herangezogen werden. Dazu wird in dem Datenstrang, der generell in der hierfür üblichen Vierdraht-Technik ausgebildet ist, bei der für Hin- und Rückkanal jeweils ein Adernpaar belegt wird, ein Umsetzer benutzt, der den Datentransport auf ein einziges Adernpaar für den gleichzeitigen Betrieb in beide Richtungen (Vollduplex) reduziert. Dieser Umsetzer enthält Mittel zur Richtungsseparation, zur Regeneration und Impulsformung und zur wellenwiderstandsrichtigen Leitungsanpassung. Als Sternkoppler können allgemein erhältliche Netzwerkkomponenten wie Hubs, Switches und/oder Router eingesetzt werden. Damit ist in üblicher Weise eine Anbindung an die "neuen Dienste", wie z. B. xDSL, am Hausübergabepunkt möglich. An dem Sternkoppler, der den zentralen Punkt des Datenstranges bildet, werden über ein Rangierfeld die einzelnen Aderpaare der auf Zweidraht-Technik reduzierten Datenübertragungskanäle zusammen mit den Aderpaaren des Telefonstranges mit den zu den Anschlusseinheiten abgehenden Leitungen verbunden. Ein abgehendes Kabel enthält somit mindestens ein Telefon-Aderpaar und ein Daten-Aderpaar.

Für den Betreiber stellt sich das Telefon- und Nahdatennetz in der üblichen Weise mit den üblichen Schnittstellen an allen zugänglichen Auslässen dar. Er kann die Anlage auch an allen Stellen mit Standard-Geräten und Netzwerkprodukten erweitern.

Gemäß einer bevorzugten Weiterbildung der Erfindung sind duale Anschlusseinheiten vorgesehen, die jeweils einen Telefonanschluss und einen Datenanschluss aufweisen. Dies bedeutet, dass die Kabel, die aus mindestens zwei Zweidraht-Leitungen bestehen, jeweils zu einer dualen Anschlusseinheit führen, die den Anschluss von Telefonkomponenten (Telefon oder Fax) und Datenkomponenten ermöglichen, wobei beide Komponenten simultan betrieben werden können.

Die Anschlusseinheiten, bei denen es sich um Teilnehmerdosen handelt, können als Enddosen oder auch als Durchgangsdosen ausgebildet sein. Im Falle einer Durchgangsdose enthält der Telefonzweig entweder eine Vorrichtung zum Durchschleifen, oder es wird ein weiteres Aderpaar für den nachfolgenden Teilnehmer mitgeführt. Der Datenteil enthält außer dem Umsetzer noch einen aktiven Knoten, der eine Verteilmatrix zum Weiterleiten bzw. Zum Einschleifen der entsprechenden Datenströme beinhaltet.

Das integrierte Telefon- und Datennetz kann so mit zentraler Stromeinspeisung für das Datennetz betrieben werden. In diesem Fall versorgt eine Stromversorgung alle Anschlusseinheiten über den im Datenstrang befindlichen Umsetzer. Es können innerhalb des Netzwerks mehrere Einspeisepunkte für mehrere Stromversorgungseinrichtungen vorgesehen werden.

Eine passive Lösung sieht vor, dass die Datenendgeräte selbst über Eingangsschaltungen mit Signalaufbereitung verfügen. Hierbei kommt die Anschlusseinheit ohne aktive Komponente aus.

Im folgenden wird ein Ausführungsbeispiel der Erfindung unter Bezugnahme auf die Zeichnungen näher erläutert.

Es zeigen
- Fig. 1: ein Blockschaltbild des lokalen integrierten Telefon- und Datennetzes,
- Fig. 2: ein Blockschaltbild einer Anschlusseinheit und
- Fig. 3: ein Blockschaltbild einer Anschlusseinheit mit zusätzlichem Durchgang.

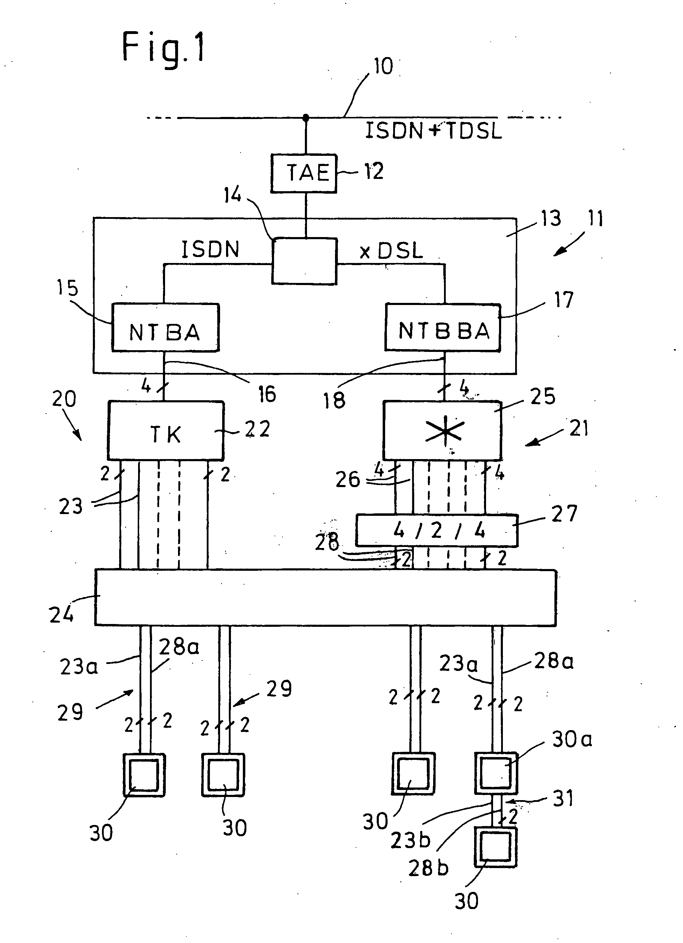

Gemäß Fig. 1 ist an ein öffentliches Breitbandnetz 10, beispielsweise das Netz der Telekom, ein lokales integriertes Telefon- und Datennetz 11 angeschlossen. Das Breitbandnetz 10 überträgt beispielsweise in einem niederfrequenten Basisband Signale in ISDN-Technik und in einem höherfrequenten HF-Band Signale in x-DSL-Technik. An das Breitbandnetz 10 ist das lokale Netz 11 mit einem Übergabepunkt TAE 12 angeschlossen. Der Übergabepunkt 12 ist mit einem Verteiler 13 verbunden, der entweder kompakt in einem Gehäuse aufgebaut ist, oder aber die Einzelkomponenten Frequenzweiche 14, NTBA-Leitungsabschluss 15 und NTBBA-Leitungsabschluss 17 als Einzelgeräte enthält. Der NTBA-Leitungsabschluss 15 stellt die vieradrige S0-Schnittstelle 16 für den ISDN-Zweig zur Verfügung. Der NTBBA-Leitungsabschluss 17 bildet die vieradrige Datenschnittstelle 18 für den xDSL-Zweig. In den Zeichnungen ist die Anzahl der in den Leitungen enthaltenen Drähte oder Adern jeweils durch die Zahl "2" oder "4" bezeichnet, wobei die zugehörige Leitung mit einem Schrägstrich durchkreuzt ist.

Der Verteiler 13 verbindet das Breitbandnetz 10 einerseits mit einem an die Schnittstelle 16 angeschlossenen Telefonstrang 20 und andererseits mit einem an die Schnittstelle 18 angeschlossenen Datenstrang 21. Der Telefonstrang 20 enthält eine Telekommunikationsanlage (TK-Anlage) 22, die auch als Telefon-Nebenstellenanlage bezeichnet werden kann. Von dieser gehen mehrere Zweidraht-Leitungen 23 ab, die jeweils einer Telefonanschlusseinheit bzw. einer Nebenstelle zugeordnet sind. Diese Leitungen 23 sind mit einem Verteilerfeld 24 verbunden, wo sie jeweils mit einer Zweidraht-Leitung aus dem Datenstrang 21 in einer gemeinsamen Leitung vereinigt werden.

Die vierdrähtige Schnittstelle 18 ist mit einem Sternkoppler 25 verbunden, der durch einen Hub, Switch oder Router gebildet werden kann. Auf der anderen Seite weist der Sternkoppler 25 mehrere vierdrähtige Anschlüsse 26 auf. Die vierdrähtigen Anschlüsse 26 sind mit einem Umsetzer 27 verbunden, der eine Umsetzung von einer Vierdraht-Leitung auf eine bidirektionale Zweidraht-Leitung 28 durchführt, und umgekehrt eine Umsetzung von einer bidirektionalen Zweidraht-Leitung 28 auf den zugehörigen vierdrähtigen Anschluss 26. Der Umsetzer 27 kann daher als vier/zwei/vier-Umsetzer bezeichnet werden, was bedeutet, dass er von vier unidirektional betriebenen Drähten auf zwei bidirektional betriebene Drähte umsetzt.

Die Leitungen 28 sind mit dem Verteilerfeld 24 verbunden. Das Verteilerfeld 24 führt jeweils die zu einer Teilnehmerstelle gehörenden Zweidraht-Leitungen 23 und 28 zusammen und vereinigt sie in Form der Zweidraht-Leitungen 23a und 28a in einem gemeinsamen, mindestens vierdrähtigen Kabel 29, welches zu der dualen Anschlusseinheit 30 führt.

Von dem Verteilerfeld 24 führen die Kabel 29 zu den einzelnen Anschlusseinheiten 30. Die Anschlusseinheiten 30 sind Anschlussdosen an die mit geeigneten Steckern Telefoneinrichtungen (Telefon, Fax) und Dateneinrichtungen (Computer) angeschlossen werden können. Jedes Kabel 29 enthält eine zweiadrige Leitung 23a, die mit der dazugehörigen Leitung 23 verbunden ist, und eine Leitung 28a, die mit der dazugehörigen Leitung 28 verbunden ist. Auf diese Weise ist jede Anschlusseinheit 30 über ein vieradriges Kabel sowohl mit dem Telefonstrang 20 als auch mit dem Datenstrang 21 verbunden.

Bei dem vorliegenden Ausführungsbeispiel ist der Verteiler 13 in einem Zweig für ISDN-Signale vorgesehen, wobei die Schnittstelle 16 nach dem Leitungsabschlussgerät 15 vieradrig ist. Alternativ hierzu kann der betreffende Zweig auch für die Übertragung von Analogsignalen ausgebildet sein, wobei dann der Leitungsabschluss NTBA entfällt. In diesem Falle führt eine Zweidraht-Leitung a/b von der Frequenzweiche 14 zu der Telekommunikationsanlage 22. In den Fällen, wo nur ein einzelnes Telefon betrieben wird, entfallen entsprechend NTBA und TK-Anlage.

Die Anschlusseinheiten 30 sind duale Anschlusseinheiten, die einen Telefonanschluss und einen Datenanschluss aufweisen. Der Datenstrang 21 bildet ein lokales Datennetz (z. B. Ethernet), bei dem die einzelnen Teilnehmer über die Anschlusseinheiten 30 miteinander kommunizieren können. Natürlich könnte auch unter Verzicht der Telefonverbindung dieses Leitungspaar für einen weiteren Datenstrang bereitgestellt werden.

In Fig. 1 ist eine duale Anschlusseinheit 30a als Durchgangseinheit ausgebildet, die über eine Zweidraht-Leitung 31 mit einer weiteren Anschlusseinheit 30 verbunden ist.

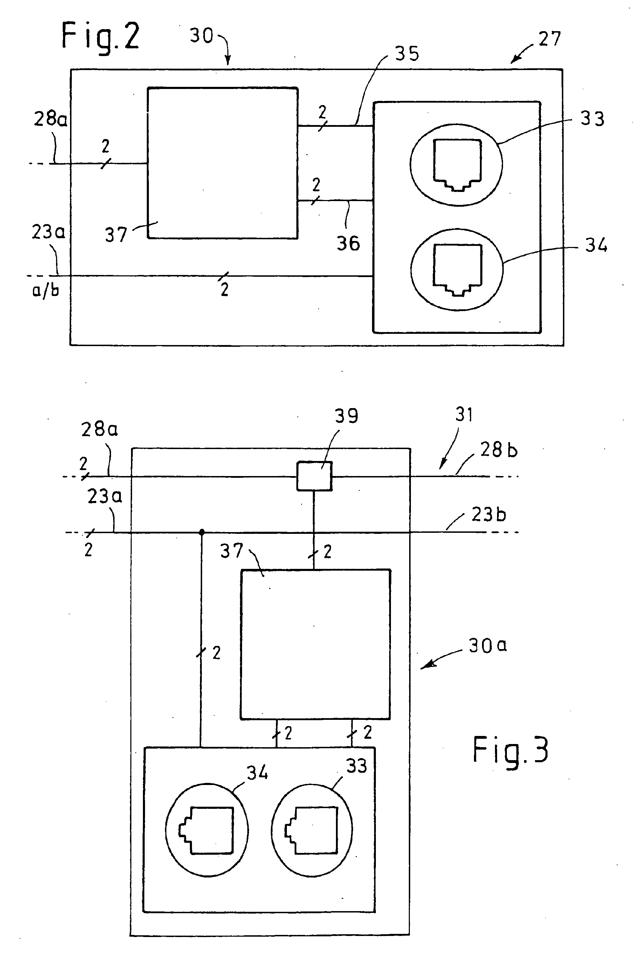

Fig. 2 zeigt den Aufbau einer Anschlusseinheit 30, die eine Datensteckdose 33 und eine Telefonsteckdose 34 enthält. Die Datensteckdose 33 ist mehrpolig (z. B. mindestens vierpolig), wobei ein Zweidraht-Anschluss 35 für die Hinleitung von Daten und ein weiterer Zweidraht-Anschluss 36 für die Rückleitung von Daten vorgesehen ist. Die Anschlüsse 35 und 36 sind mit einer Richtungserkennungseinrichtung 37 verbunden, welche an eine bidirektionale Zweidraht-Leitung 28a angeschossen ist. Die Richtungserkennungseinrichtung 37 erkennt die Richtung der ankommenden Daten. Wenn Daten auf der Zweidraht-Leitung 28a ankommen, werden sie auf den Zweidraht-Anschluss 35 gelenkt. Wenn Daten auf dem Zweidraht-Anschluss 36 ankommen, werden sie auf die Zweidraht-Leitung 28a gelenkt. In ähnlicher Weise ist der Umsetzer 27 ausgebildet, der eine Umsetzung von den Vierdraht-Leitungen 26 auf die bidirektionalen Zweidraht-Leitungen 28 vornimmt, und umgekehrt. Auch dieser Umsetzer enthält eine Datenrichtungserkennungseinrichtung zur Steuerung des Datenflusses zwischen den Zweidraht-Leitungen und den Vierdraht-Leitungen.

Bei der Durchgangs-Anschlusseinheit 30a ist die Zweidraht-Leitung 23a nicht nur mit der dazu gehörigen Anschlussbuchse 34 verbunden, sondern zusätzlich mit einem zweiadrigen Ausgang 23b durchgeschleift. Die Zweidrahtleitung 28 a ist mit einem aktiven Knoten 39 verbunden und über diesen mit der Richtungserkennungseinrichtung 37 und mit einem zweiadrigen Ausgang 28b verbunden. Der aktive Knoten 39 ist eine Richtungsweiche für die richtungsselektive Weiterleitung von Daten, wodurch verhindert wird, dass Daten zu derselben Einrichtung zurückgeschickt werden, von der sie gekommen sind.

## Patentansprüche

1. Lokales integriertes Telefon- und Datennetz mit wenigstens einem an ein öffentliches Breitbandnetz (10) anschließbaren Übergabepunkt (12), einem mit dem Übergabepunkt (12) verbundenen Verteiler (13), der das Breitbandnetz (10) mit einem Telefonstrang (20) und einem Datenstrang (21) verbindet, einer in dem Telefonstrang (20) enthaltenen Telekommunikationsanlage (22), von der jeweils eine Zweidraht-Leitung (23) zu einer von mehreren Anschlusseinheiten (30) führt, und einem in dem Datenstrang (21) enthaltenen Sternkoppler (25), der mit Vierdraht-Leitungen (26) für jeweils Anschlusseinheit (30) verbunden ist,
**dadurch gekennzeichnet, dass**
die Vierdraht-Leitungen (26) des Sternkopplers (25) mit einem Umsetzer (27) verbunden sind, der eine Umsetzung von einer Vierdraht-Leitung (26) auf eine bidirektionale Zweidraht-Leitung (28) durchführt, und dass jeweils eine Zweidraht-Leitung (23a) des Telefonstranges (20) mit einer Zweidraht-Leitung (28a) des Datenstranges (21) vereinigt ist.

2. Lokales integriertes Telefon- und Datennetz nach Anspruch 1 **dadurch gekennzeichnet, dass** jeweils eine Zweidraht-Leitung (23a) des Telefonstranges (20) und eine Zweidraht-Leitung (28a) des Datenstranges (21) in demselben Kabel (29) vereinigt sind.

3. Lokales integriertes Telefon- und Datennetz nach Anspruch 1 oder 2 **dadurch gekennzeichnet, dass** jeweils eine Zweidraht-Leitung (23a) des Telefonstranges (20) und eine Zweidraht-Leitung (28a) des Datenstranges (21) zu einer dualen Anschlusseinheit (30) führen, die einen Telefonanschluss (34) und einen Datenanschluss (33) aufweist.

4. Lokales integriertes Telefon- und Datennetz nach Anspruch 3 **dadurch gekennzeichnet, dass** die duale Anschlusseinheit (30) eine mit dem Datenanschluss (33) verbundene Richtungserkennungseinrichtung (37) enthält.

5. Lokales integriertes Telefon- und Datennetz nach Anspruch 3 **dadurch gekennzeichnet, dass** eine duale Anschlusseinheit (30a) die Zweidraht-Leitungen (23a,28a) mit zwei weiteren Zweidraht-Leitungen (23b,28b) durchverbindet.

## Claims

1. Local integrated telephone and data network having at least one interchange point (12) that can be connected to a public broadband network (10), a distributor (13) that is connected to the interchange point (12) and that connects the broadband network (10) to a telephone section (20) and to a data section (21), a telecommunication installation (22) that the telephone section (20) contains and from which a respective two-wire line (23) is routed to one of a plurality of access units (30), and a star coupler (25) that the data section (21) contains and that is connected to four-wire lines (26) for a respective access unit (30),
**characterized in that**
the four-wire lines (26) of the star coupler (25) are connected to a converter (27) that performs conversion from a four-wire line (26) to a bidirectional two-wire line (28), and **in that** a respective two-wire line (23a) of the telephone section (20) is combined with a two-wire line (28a) of the data section (21).

2. Local integrated telephone and data network according to Claim 1, **characterized in that** a two-wire line (23a) of the telephone section (20) and a two-wire line (28a) of the data section (21) are respectively combined in the same cable (29).

3. Local integrated telephone and data network according to Claim 1 or 2, **characterized in that** a two-wire line (23a) of the telephone section (20) and a two-wire line (28a) of the data section (21) are respectively routed to a dual access unit (30) that has a telephone access (34) and a data access (33).

4. Local integrated telephone and data network according to Claim 3, **characterized in that** the dual access unit (30) contains a direction recognition device (37) that is connected to the data access (3).

5. Local integrated telephone and data network according to Claim 3, **characterized in that** a dual access unit (30a) connects the two-wire lines (23a, 28a) to two further two-wire lines (23b, 28b).

## Revendications

1. Réseau local intégré de téléphone et de données présentant
au moins un point de transfert (12) qui peut être raccordé à un réseau public (10) à large bande,
un répartiteur (13) raccordé au point de transfert (12) et reliant le réseau (10) à large bande à une branche téléphone (20) et une branche données (21),
une installation de télécommunication (22) reprise dans la branche téléphone (20) et de laquelle un conducteur (23) bifilaire conduit à une parmi plusieurs unités de raccordement (30) et
un coupleur en étoile (25) repris dans la branche données (21) et relié à des conducteurs quadrifilaires (26) prévus pour chaque unité de raccordement (30), **caractérisé en ce que**
les conducteurs quadrifilaires (26) du coupleur en étoile (25) sont raccordés à un convertisseur (27) qui assure la conversion d'un conducteur quadrifilaire (26) à un conducteur bifilaire bidirectionnel (28) et
**en ce que** chaque conducteur bifilaire (23a) de la branche téléphone (20) est réuni à un conducteur bifilaire (28a) de la branche données (21).

2. Réseau local intégré de téléphone et de données selon la revendication 1, **caractérisé en ce que** chaque conducteur bifilaire (23a) de la branche téléphone (20) et un conducteur bifilaire (28a) de la branche données (21) sont réunis dans le même câble (29).

3. Réseau local intégré de téléphone et de données selon les revendications 1 ou 2, **caractérisé en ce que** chaque conducteur bifilaire (23a) de la branche téléphone (20) et un conducteur bifilaire (28a) de la branche données (21) conduisent à une unité de raccordement duelle (30) qui présente un raccordement téléphonique (34) et un raccordement de données (33).

4. Réseau local intégré de téléphone et de données selon la revendication 3, **caractérisé en ce que** l'unité de raccordement duelle (30) contient un dispositif (37) de reconnaissance de direction raccordé en raccordement de données (33).

5. Réseau local intégré de téléphone et de données selon la revendication 3, **caractérisé en ce qu'**une unité de raccordement duelle (30a) relie les conducteurs bifilaires (23a, 28a) à deux autres conducteurs bifilaires (23b, 28b).
